# EUROPEAN PATENT APPLICATION

(11) **EP 1 752 918 A1**
(43) Date of publication of application: **14.02.2007**
(21) Application number: 05014691.9
(22) Date of filing: 06.07.2005
(51) Int. Cl.: G06Q 10/00, G06F 21/00

(54) **License server and user processor**

(71) Applicant: Nero AG, 76307 Karlsbad (DE)
(72) Inventor: Eckleder, Andreas, 76307 Karlsbad (DE)
(74) Representative: Zinkler, Franz

(57) **Abstract**

A license server for granting licenses in response to a user request receives (10) a content identifier from a user identifying a content having associated therewith a user key necessary for decrypting an encrypted version of the content. Furthermore, a license terms provider (12) for providing license terms in response to the content identifier is present. The license terms are independent of an identification of the user and restrict the use of the content. An output interface (13) provides the license terms and the encrypted version of the content key to the user.

## Description

The present invention relates to handling of information content such as audio information, video information, text information, binary data etc., and, particularly, to the field of digital rights management.

There exist many ways to distribute encrypted content, which has audio information, video information, text information, binary files etc., to users, while making sure that the users pay some fees to the content provider. The straightforward way is that the user acquires an encrypted file and buys the key for decrypting the file at the content provider. Using the key, the user can decrypt the file to use a decrypted version of the content. Naturally, the buying of the key can be performed electronically via the Internet. To this end, the user normally accesses a license provider website and answers several questions on his name, e-mail address, address, telephone number, fax number, credit card number, etc. Thus, the user has to fill-in a lot of personal information so that the content provider has enough information to make sure that any fees for the content can be collected from the content buyer.

Normally, one can also obtain an information content free of charge via the Internet. There exist several share ware programs or free music or video files, which are distributed without collecting fees. Normally, only a low-level version of the program packet is distributed for free, while an upgraded version is only available, when the user pays some fee. The distribution of the low-level version is performed to initiate or increase the need on the user side to spend some money for the upgraded version. Stated in other words, such a low-level version is distributed as a kind of an "appetizer" for more.

Nevertheless, in order to receive such an appetizer, the user still has to enter his personal data such as e-mail address, place of residence, etc. The only information, which is normally not needed in this kind of transaction, is the credit card number, since there is no money flow.

On the license server, a user account for each user having a low-level version or having an upgraded version is installed. In this user account, a user identification such as an e-mail address or an encrypted version of the e-mail address is stored together with information on the product, the user has downloaded for free or for a certain fee.

Such prior art concepts are advantageous in that the content provider has a good overview over the persons possessing his products irrespective of the fact, whether the persons have paid or not. Additionally, the license provider normally sends a license agreement to the user, which has to be accepted by the user before the user can use the program or the content. This signed/accepted license agreement is also stored at the license provider so that the license provider has some changes to suit a fraudulent user, which distributes a program or even sells a program, although this user accepted license terms not allowing such steps.

There are, however, severe limitations in this concept, since an increasing number of Internet participants are very reluctant to send their e-mail address to a site, from which the user do not know anything with respect to confidence, etc. Stated in other words, recent developments have shown that the mis-use of e-mail addresses for Spam mails is increasing more and more. Spam mails are annoying due to their content and also due to the very existence of these mails, since the user has to delete this mails, whether they are read or not. Furthermore, a very restrictive policy in distributing an e-mail address makes sure that e-mails effected by viruses or worms are not sent to a certain mail address.

On the other hand, a license server or content provider is interested in selling his content to its customers. Unfortunately, however, the content provider does not have the chance to prove its well-behaved policy. Stated in other words, the license server or content provider has to deal with the situation that, from the beginning, it is regarded as a non-trust worthy entity.

The final consequence of this situation is that many customers do not download any information content because of the simple fact that they have to give out their e-mail address or any other personal information. Although, the users do not have to pay any fees and although they do not have any further obligations, and although the users would be interested in the content offered by the content provider, they do not start a communication with the content provider because of the fact that the content provider requires them to issue personal information such as an e-mail address although the (potential) user does not know anything about the trustworthiness of the license server/content provider.

It is the object of the present invention to provide a content distribution concept, which has an increased acceptance for the users.

This object is achieved by a license server in accordance with claim 1, a method of granting licenses in accordance with claim 10, a user processor system in accordance with claim 11, a method of obtaining a license in accordance with claim 14 or a computer program in accordance with claim 15.

The present invention is based on the finding that, for increased user acceptance, a license grant is performed without requiring any user information such as an e-mail address, a mail address, a telephone number, a fax number, a credit card number or something like that. Instead, the user only has to provide a content identifier identifying a content, the user is interested in. Since this content identifier does not include any specific information on the user, but is the same for a plurality of users, the user does not have to show his or her identity to the license server.

Thus, the present invention allows the description of rights group of entities may exercise against the particular resource. This description is the content identifier. The group of entities, which are in knowledge of the content identifier, which is preferably a globally unique identifier, can anonymously access the license server by only identifying a content or - generally - a license, which an anonymous user of a group of users wishes to have. The license server then provides license terms in response to the content identifier to the user, the license term identifying the kind of access that is granted to a certain resource along with conditions under which such access may be performed.

While prior art concepts require the user to either have an account on the license server or be in possession of the license description in either encrypted or unencrypted form, which results in the need that the service provider has to know details about a user that uniquely identifies the user or which requires the physical transfer and storage of licenses, which is not possible in certain situations, the present invention overcomes these disadvantages by granting licenses without any personal information from the user.

In contrast to the prior art, in which accounts are unique to entities on a license server, so that one account can not influence other accounts, the present invention allows such cross-user influence so that content offering models such as giving away a certain number of granted licenses for free until money is charged for a license are made possible by the present invention.

Preferred embodiments of the present invention are described in detail with reference to the accompanying drawings, in which:
- Fig. 1a: illustrates a preferred embodiment of a user/server transaction until transmission of the encrypted content key and the license conditions;
- Fig. 1b: illustrates a user processing in accordance with a preferred embodiment based on a granted license provided by the inventive license server;
- Fig. 2: is a schematic diagram illustrating a preferred embodiment of an inventive license server; and
- Fig. 3: illustrates a flow chart of the processing performed in the controller or the license terms provider of Fig. 2.

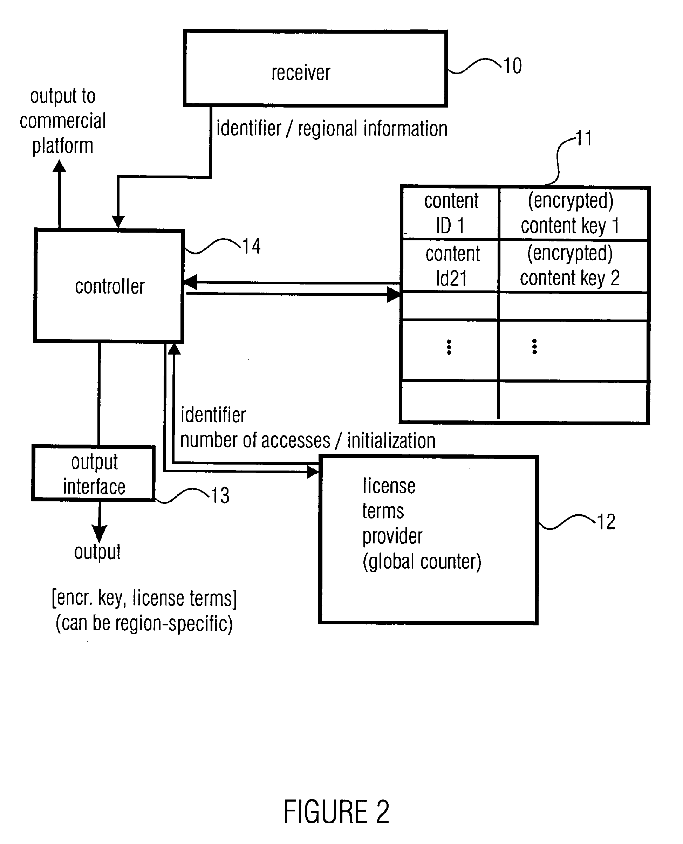

Fig. 2 illustrates a preferred embodiment of the license server in accordance with the present invention. Generally, the license server is used for granting licenses in response to a user request. To this end, the license server includes a receiver receiving a content identifier from a user identifying a content. The content has associated therewith a content key, which is necessary for decrypting an encrypted version of the content. Preferably, content keys are stored in a content table 12, which has, as a first entry, a content ID for a certain content, and which has, as a second entry, an encrypted or plaintext version of the content key necessary for decrypting and an encrypted version of the content. The inventive license server further includes a license terms provider 12 for providing license terms in response to the content identifier, wherein, in accordance with the present invention, the license terms are independent of an identification of the user. The license terms are such that the use of the content is restricted by the license terms compared to a completely free use.

Furthermore, the inventive license server includes an output interface 13 for outputting the license terms and an encrypted version of the content key to the user in response to the user's license request. Preferably, the license server includes a controller such as a digital signal processor or CPU, which is indicated as 14 in Fig. 2. The controller is operative to receive the identifier from the receiver, to use the identifier to access the look-up table 11 for obtaining the encrypted or un-encrypted key, and to forward the identifier to the license term provider so that the license term provider responds by forwarding license terms back to the controller. Then, the controller formats the license terms together with the encrypted key into the output message, which is output to the user by the output interface 13.

Preferably, the receiver 10 is also operative to receive some regional information from the user. It is emphasized that this regional information does not constitute a user identification, but only indicates, for example, from which country the user calls the license server. Using this regional information, the comfort for the user can be enhanced, since the license server can reply in the language, which is spoken in the region, in which the user resides. Nevertheless, the regional information will not be sufficient for uniquely identifying the user so that the anonymity of the user vis-à-vis the license server is not jeopardized.

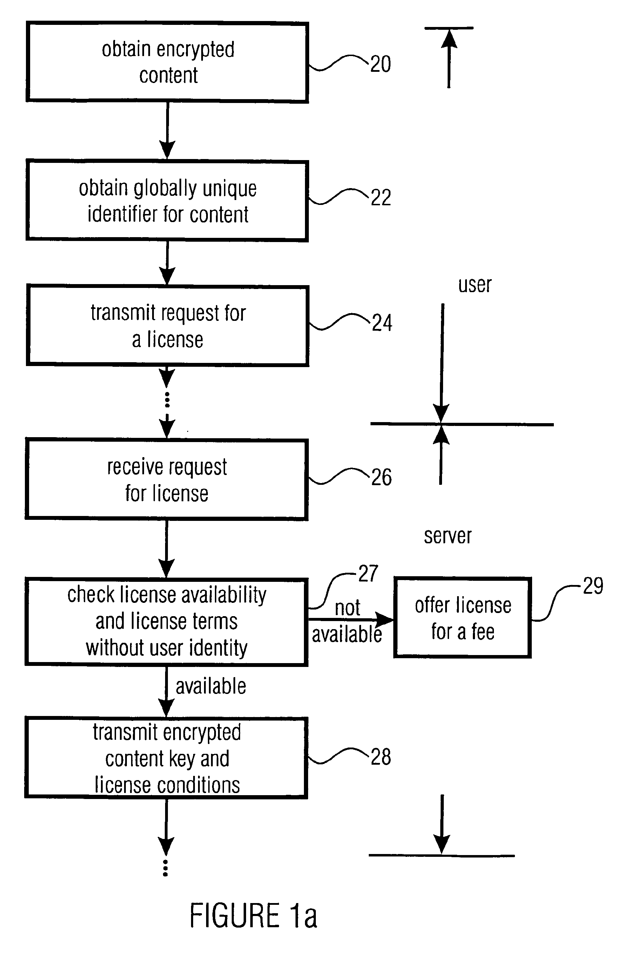

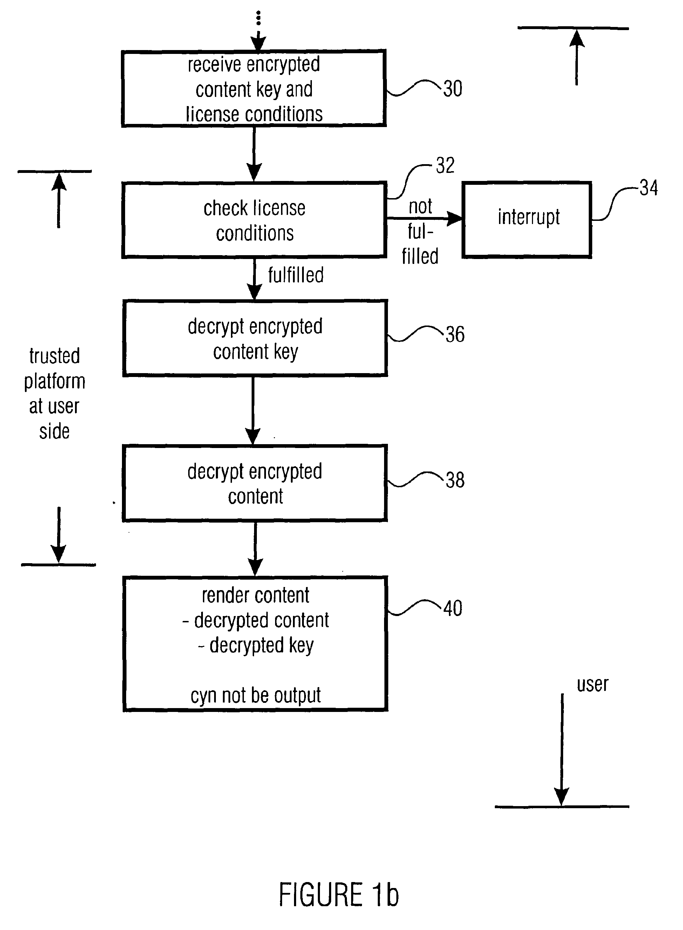

Before discussing the license terms provider 12 or the controller 14 in detail, reference is made to Figs. 1a and 1b to show a complete sequence of steps to be performed by a user processor and the license server so that, at the end, the user processor can render an information content. First of all, the user obtains an encrypted content (step 20 in Fig. 1a). Naturally, this encrypted content is useless for the user, since the user cannot decrypt the encrypted content without the key. Nevertheless, it is preferred that the encrypted content includes the content identifier. Alternatively, the content identifier for identifying the encrypted content can also be acquired using a separate channel, i.e., separate from the encrypted content itself. Thus, in step 22, the user obtains the globally unique identifier for the content, which is, preferably, already present at the user in encrypted form.

The user additionally is in possession of an address of the license server. Preferably, this address is already encoded within the unique content identifier, or is extracted from the unique identifier by an application program running on the user computer.

In step 24, the user processor transmits a request for a license to a license server. Importantly, it is not necessary that the user transmits a user identification. It is only necessary for the user to transmit the content identifier identifying the encrypted content.

Now, processing is continued on the server-side. In step 26, the server receives a request for a license from the user. Importantly, the server will process this request without any information on the user identity such as an e-mail address or anything else from the user. Thus, the server will process this anonymous use request by checking a license availability and license terms as shown in step 27 of Fig. 1a. Importantly, the license terms do not depend on the user, but are dependent on conditions, which are not influenced by the current user. These conditions include, for example, the number of accesses to the license server for the same content by users before the request of the actual user, the state of a clock within the license server so that licenses are granted, for example, only some days and are not granted anymore, when a certain date and time have been elapsed. Further possibilities for not-granting licenses or for changing licenses from one user to another user, which do not depend on the user identity, are the number of accesses to the server for all contents or only for certain contents within a certain time period, etc.

When the server determines in step 27, that a license is available, the server will transmit the encrypted content key and the license conditions to the user as outlined in step 28. When, however, a license is not available, it is preferred that the server offers any other product such as a license for a certain fee, which is indicated in step 29. Naturally, the user will have to provide some money to the server, when the user wants to buy a license. When this money-transfer has to be performed electronically, the user will have to provide personal data. Nevertheless, when a user has already paid for a license via another channel, the user can use the anonymous license grant procedure in accordance with the present invention. Preferably, however, the inventive anonymous license grant is used for distributing free licenses, which, however, include a restricted use of the information content. Such a restricted use can be one of the following: The rendering or decryption of the content is limited to a certain number of times, copying of the encrypted file is limited to a certain number of times, decryption is only possible until an expiration date, which can be prolonged by paying a fee or which is an absolute deadline, which can not be prolonged by paying a certain fee, etc.

Referring to Fig. 1b, a user processor system will receive the encrypted content key and the license conditions as indicated in step 30. In step 32, the user processor will check the license conditions set forth in the license terms. When the license terms checker finds out in step 32, that the license conditions are not fulfilled, it will initiate an interrupt sequence as outlined in step 34. This interrupt sequence will make sure that a further decryption of the information content is not possible. This interrupt sequence may include a prompt to the user to contact the license server for getting information how the license can be activated. When the license checker checks that the license conditions are fulfilled, the control proceeds to step 36 and step 38, in which a decrypter decrypts the encrypted content key and decrypts the encrypted content using the decrypted content key. Finally, when step 38 is completed for the information content, the content can be rendered as indicated in step 40. Preferably, the user processor system is arranged such that a decrypted content can only be output in analogue form but cannot be output in digital plaintext form. Furthermore, the user processor system is arranged to make sure that the plaintext key can also not be output by the system. Procedures for ensuring the conditions in step 40 can be implemented by hardware or software known as "robust" hardware/software measures.

Preferably, steps 32 to 38 are performed by a trusted entity or a trusted platform at the user processor system. This trusted platform makes sure that the checking of the license conditions in step 32 cannot be circumvented. Furthermore, the trusted platform module performs a key exchange between the license server and the user processor system in order to obtain information necessary to decrypt the encrypted content key. Procedures for a key distribution are known in the art and are preferably based on asymmetric cryptographic protocols. Exemplarily, the Diffie Hellman key exchange scheme is mentioned here. Such key exchange methods can be performed without sacrificing the anonymity of the inventive concept, which makes sure that the inventive concept will receive high acceptance among users, which are reluctant to issue their personal information such as their e-mail address, etc.

The present invention relates to a globally unique identifier identifying a particular license or a particular license positioned on a particular license server. Knowing this unique identifier is the only requirement for an entity to be able to exercise the certain right against the certain kind of content under certain conditions. Knowing a globally unique identifier means that an entity has direct or indirect access to the globally unique identifier possibly by means of a trusted third entity.

A globally unique identifier allows access to a resource regardless of physical location of both entity and license server. Regional dependence may be further specified by means of additional conditions.

Using the globally unique identifier, a trusted application seeks contact to the license server governing the contents for which the license referenced by the globally unique identifier has been issued in order to retrieve the sequence necessary to use the content along with conditions under which the content may be used. Importantly, the encryption key is linked to the license terms and vice versa so that a user cannot separate (and delete) the license terms in order to circumvent the restrictive license terms.

Importantly, such license terms or license conditions are not bound to a particular entity. Rather, they are regarded to be globally unique. Conditions may include the value of dynamic variables which are shared among all entities in knowledge of the global unique identifier. Under the terms of such a license, all entities sharing the knowledge of a globally unique identifier are treated equally. It is not possible to identify individual entities knowing the globally unique identifier used to obtain a license from a license storage facility or the license server.

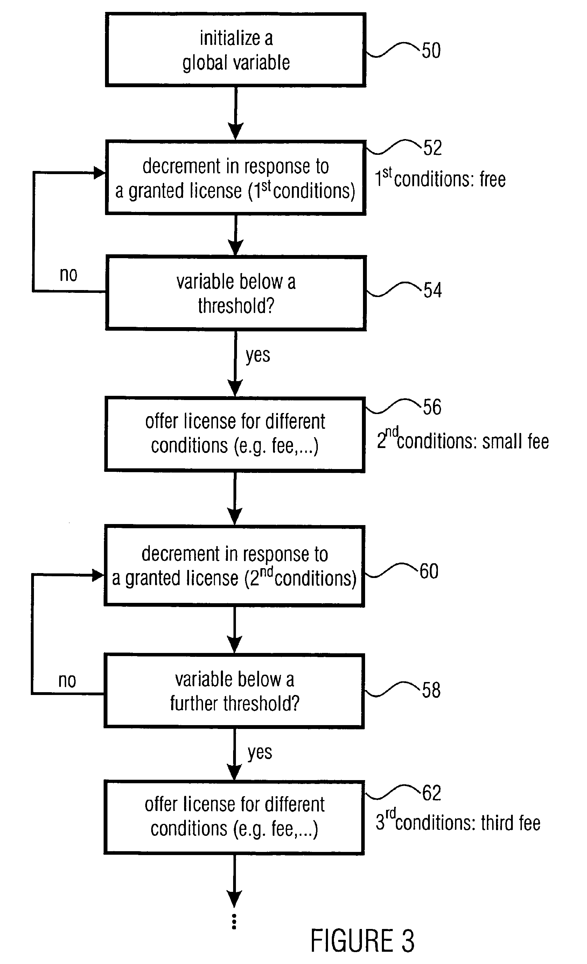

Subsequently, reference is made to Fig. 3 to illustrate a preferred embodiment of the present invention, in which a license server uses one or more global variables for influencing the license availability and/or the license terms/conditions.

The license server, which is a repository for licenses identified by globally unique identifiers as outlined by the exemplary look-up table in Fig. 2, initialises a global variable as shown in step 50. This initialisation of the global variable at the license server will take place by a certain event, which can be the first grant of a license for a certain content indicated by the content identifier, or which can be set by a certain time or by a license server control device. The globally unique identifiers, which are received by the license server are either known literally to the user or are contained in a file or stored as a meta data entry of a content file. In the latter case, the user needs access to the content only in order to be able to access it.

Once a globally unique identifier is communicated to the license server, the license server replies with a license description, which contains a list of conditions that must be fulfilled for the license to grant access to the content it governs. Thus, the license description having the list of conditions will be checked in step 32 of Fig. 1b so that the license checker can decide, whether the license conditions are fulfilled or not by the specific user processor system.

Such license conditions can be expiry dates or global replay back counters.

In the latter case, a global variable contained in the license description is initialised with a certain value, which is then decreased with a license grant for a specific right by an entity knowing the globally unique identifier referencing the license. Stated in other words, the global variable held at the license server is decremented in response to a granted license as illustrated by step 52. A grant of a license results in a decrementation of the global variable in step 52. The license has the first license conditions such as the free of charge license condition.

Naturally, the counter could also start at zero and could increment at each license grant until a threshold, at which no more free licenses are given anymore

After each license grant, a determination is made, to check, whether the global variable is reached or is below a certain threshold (box 54 in Fig. 3). As it is determined that the variable is below a threshold, control proceeds to step 56, where a license is offered for different conditions such as a certain (small) fee per license. When, however, step 54 determines that the global variable is not equal to or below a threshold, control proceeds back to step 52.

This allows the first n grants of a right to be governed by this license having the first license conditions (step 52), while, starting at n+1, a new license must be acquired for content play back as offered in step 56. This new license will be available, commercially for a preferably small fee. Thus, n entities knowing the globally unique identifier referencing the license may exercise a right under the terms of a license, i.e., for free, while entities n+1, n+2, ....., have to pay a fee. The number of the entities having to pay the fee in accordance with the second conditions is determined by a further threshold as outlined in box 58, where a decrementation from the threshold examined in step 54 to the threshold in step 58 is performed by step 60 in response to a granted license in accordance with the second license conditions, which require the certain fee.

This procedure can be further continued as illustrated by step 62, which illustrates a certain license having again different conditions such as a higher fee or other expiration dates etc.

Thus, a preferred process in Fig. 3 allows to distribute a well-controlled number of licenses for a well-controlled information content to a well-controlled number of users without disturbing the anonymity of the users. Thus, any barriers because of a lack of trustworthiness which a user might have can be overcome by firstly providing anonymous services to the users, wherein the license server can prove that it is trustworthy and that it does not misuse any private user information. Then, when the user has enjoyed the freely distributed content, and when the user is convinced of the trustworthiness of the license server, the license server can offer a license for a fee, which might incur the collection of personal data from the user when a cash-less money transfer is selected. In this situation, however, the user does not have any objections anymore against the license service so that the user is willing to buy a license from the license server and to give personal information to the license server.

Thus, the present invention allows to distribute appetizers to users without requiring the users to output any sensitive private information. Nevertheless, when the available free license are consumed, the inventive license server has the chance to contact the user and to provide him with an offer.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. License server for granting licenses in response to a user request, comprising:
a receiver (10) for receiving a content identifier from a user identifying a content having associated therewith a content key necessary for decrypting an encrypted version of the content;
a license terms provider (12) for providing license terms in response to the content identifier, the license terms being independent of an identification of the user and restricting a use of the content; and
an output interface (13) for outputting the license terms and an encrypted version of the content key.

2. License server in accordance with claim 1, in which the license terms provider (12) is further operative:
to check a license availability based on a condition, which depends on a global variable, the global variable being independent of the user, and
to provide the license terms, when a license availability has been confirmed.

3. License server in accordance with claim 2, further comprising a controller (14) for initiating an offer message routine, when a non-availability of the license is determined by the license terms provider.

4. License server in accordance with claim 1,
in which the license terms provider (12) is operative:
to hold a value of a global variable,
to change (52) the value, when a license is granted, and
to check (54) the license availability by comparing the value to a threshold value and by deciding the availability based on the result of comparing.

5. License server in accordance with claim 1, in which the license terms provider (12) is operative to determine, in response to the content identifier, the license terms based on a global variable (50), which is independent of an identification of the user.

6. License server in accordance with claim 5, in which the global variable depends on a state of the license server.

7. License server in accordance with claim 6, in which the state of the license server includes a time of a clock of the license server, a number of already granted licenses for the content or for a group of contents, a value indicating a number of user requests in a specified time period.

8. License server in accordance with claim 1, in which the content identifier is plaintext, and is included in a file or stored as a meta-data entry of a file, the file including the encrypted version of the content.

9. License server in accordance with claim 1, in which the receiver is operative to receive an indication on a region, in which the user resides, and
in which the output interface is operative to output the license terms and the encrypted version of the content key together with an explanation, the explanation being in a language determined by the region, in which the user resides.

10. Method of granting licenses in response to a user request, comprising:
receiving (10) a content identifier from a user identifying a content having associated therewith a content key necessary for decrypting an encrypted version of the content;
providing (12) license terms in response to the content identifier, the license terms being independent of an identification of the user and restricting a use of the content; and
outputting (13) the license terms and an encrypted version of the content key.

11. User processor system for obtaining a license from a license server, comprising:
a sender for sending (24) a content identifier identifying a content to a license server, the sender being operative to not send a user identification to the license server;
a receiver for receiving (30) license terms and an encrypted version of a content key necessary for decrypting an encrypted content;
a license terms checker for checking (32) the license terms;
a decrypter for decrypting (36, 38) the encrypted version of the content key and for decrypting an encrypted version of the content,
wherein the decrypter is operative to provide a decrypted version of the content only, when the license checker outputs an indication that decryption is allowed by the license terms.

12. User processor in accordance with claim 11, in which the decrypter and the license checker are controlled by a trusted platform module or are part of a trusted platform module.

13. User processor in accordance with claim 11, which is arranged to restrict (40) access to a digital version of the unencrypted content or to a plain text version of the key using hardware and/or software measures.

14. Method of obtaining a license from a license server, comprising:
sending (24) a content identifier identifying a content to a license server, the sender being operative to not send a user identification to the license server;
receiving (30) license terms and an encrypted version of a content key necessary for decrypting an encrypted content;
checking (32) the license terms;
decrypting (36,.38) the encrypted version of the content key and decrypting an encrypted version of the content,
wherein the step pf decrypting is operative to provide a decrypted version of the content only, when the license checker outputs an indication that decryption is allowed by the license terms.

15. Computer program for performing, when running on a computer, a method of claim 10 or claim 14.

## Amended claims

### Amended claims in accordance with Rule 86(2) EPC.

**1.** License server for granting licenses in response to a user request, comprising:
a receiver (10) for receiving a content identifier from a user identifying a content having associated therewith a content key necessary for decrypting an encrypted version of the content;
a license terms provider (12) for providing license terms, the license terms provider being operative
to check, in response to the content identifier, an availability for first license terms based on a condition, wherein the condition depends on a global variable, the global variable being independent of the user, and wherein the first license terms are independent of an identification of the user, restrict a use of the content and are available without payment from the user,
to provide the first license terms, when an availability for the first license terms has been confirmed; and
a controller (14) adapted for offering second license terms, when a non-availability of the first license terms is determined by the license terms provider, the second license terms being available against payment of a license fee; and
an output interface (13) adapted
for outputting a license having the first license terms and an encrypted version of the content key, when the availability of the first license terms has been confirmed by the license provider, and
for outputting a license having the second license terms and the encrypted version of the content key, when the license fee has been paid or when the user has provided personal data for an electronic money transfer.

**2.** License server in accordance with claim 1,
in which the license terms provider (12) is operative:
to hold a value of a global variable,
to change (52) the value, when a license having the first license terms is granted, and
to check (54) the availability an for the first license terms by comparing the value to a threshold value and by deciding the availability based on the result of comparing.

**3.** License server in accordance with claim 1, in which the license term provider is adapted such that the global variable depends on a state of the license server.

**4.** License server in accordance with claim 3, in which the state of the license server includes a time of a clock of the license server, a number of already granted licenses having the first license terms for the content or for a group of contents, or a value indicating a number of user requests in a specified time period.

**5.** License server in accordance with claim 1, in which the content identifier is plaintext, and is included in a file or stored as a meta-data entry of a file, the file including the encrypted version of the content.

**6.** License server in accordance with claim 1, in which the receiver is operative to receive an indication on a region, in which the user resides, and
in which the output interface is operative to output the license terms and the encrypted version of the content key together with an explanation, the explanation being in a language determined by the region, in which the user resides.

**7.** Method of granting licenses in response to a user request, comprising:
receiving (10) a content identifier from a user identifying a content having associated therewith a content key necessary for decrypting an encrypted version of the content;
providing (12) license terms, the step of providing including the steps of:
checking, in response to the content identifier, an availability for first license terms based on a condition, wherein the condition depends on a global variable, the global variable being independent of the user, wherein the first license terms is independent of an identification of the user, restrict a use of the content, and are available without payment from the user,
providing the first license terms, when an availability for the first license terms has been confirmed;; and
offering second license terms, when a non-availability of the first license terms is determined in the step of checking, the second license terms being available against payment of a license fee; and
when the availability of the first license terms has been confirmed outputting (13) a license having the first license terms and an encrypted version of the content key, and
when the license fee has been paid or when the user has provided personal data for an electronic money transfer, outputting a license having the second license terms and the encrypted version of the content key.

**8.** Computer program for performing, when running on a computer, a method of claim 7.
